Europäisches Patentamt

European Patent Office

Office européen des brevets

(11) Publication number: **0 438 092 A1**

# EUROPEAN PATENT APPLICATION

(21) Application number: **91100340.8**

(22) Date of filing: **12.01.91**

(51) Int. Cl.5: **D21D 5/20**

(30) Priority: **17.01.90 FI 900273**

(43) Date of publication of application:
**24.07.91 Bulletin 91/30**

(84) Designated Contracting States:
**AT DE FR GB SE**

(71) Applicant: **TAMPELLA PAPERTECH OY**
**Lapintie 1**
**SF-33100 Tampere(FI)**

(72) Inventor: **Holopainen, Pentti**
**Käpytie 44**
**SF-33180 Tampere(FI)**

(74) Representative: **Selting, Günther, Dipl.-Ing. et al**
**Patentanwälte von Kreisler, Selting, Werner**
**Deichmannhaus am Hauptbahnhof**
**W-5000 Köln 1(DE)**

(54) **An apparatus for thickening fibre suspension.**

(57) A thickener for thickening fibre suspension, comprising a rotating screen surface (3) to the inner surface of which the suspension to be thickened is fed and through which part of the water contained in the suspension is removed. The screen surface (3) of the thickener is conical and arranged to rotate around a horizontal shaft (1). The fibre suspension is fed close to the end of the conical screen surface (3; 103) with smaller diameter, so that it is displaced along the screen surface (3) towards the end having a larger diameter while water is removed from it through the screen surface (3). The fibre suspension is removed from the screen surface (3) over the edge having the larger diameter under the influence of the force of gravity.

FIG. 1

## AN APPARATUS FOR THICKENING FIBRE SUSPENSION

The invention relates to an apparatus for thickening fibre suspension, comprising a screen surface rotating around its shaft and a feed conduit for feeding the fibre suspension to be thickened inside the screen surface so that water is removed from the fibre suspension through the screen surface under the influence of the centrifugal force acting on the fibre suspension due to the rotation of the screen surface, the thickened fibre suspension being discharged from one edge of the screen surface.

Fibre suspension used for the production of paper or other similar fibre webs is usually thickened in disc or drum type thickening apparatuses based on the force of gravity, in which the accept and the reject are separated by means of a liquid-permeable screen surface utilizing the force of gravity in one way or another. A problem with this kind of thickening apparatuses is that they are relatively large in size, in addition to which their efficiency depends greatly on the amount and the pressure of the fibre suspension flowing through them, i.e., their efficient range of operation is rather narrow. In such apparatuses, fibre suspension to be thickened is fed on to a perforated disc-like or cylindrical screen surface so that part of the liquid flows out through the holes and the fibre suspension gathered on the screen surface is removed either by means of the force of gravity or by means of scrapers. As compared with their pulp treating capacity, this kind of apparatuses are relative large in size.

FI Patent 53229 discloses a centrifugal apparatus in which fibre suspension to be thickened is fed inside a rotating cylindrical screen surface, and a rotator provided with screw-like blades is fitted within the screen surface, whereby the rotator rotates at a rate different from that of the screen surface, thus subjecting the fibre suspension to a force which presses it against the screen surface. This solution is very complicated and difficult to construct as well as expensive.

The object of the present invention is to provide an apparatus for thickening fibre suspension which is simple to construct, small in size and efficient in operation. This is achieved by means of the invention in such a way that the screen surface has the shape of a truncated cone and is arranged to rotate around a horizontal shaft, the feed conduit being arranged to feed the fibre suspension to that end of the screen surface which is smaller in diameter, whereby the thickened fibre suspension is discharged from the edge at that end of the screen surface which is larger in diameter.

The basic idea of the apparatus of the invention is that it comprises a conical screen surface mounted rotatably around a horizontal shaft, the fibre suspension to be thickened being fed to the narrower end of the screen surface, so that the fibre suspension is passed on under the influence of the centrifugal force and the force of gravity towards the outer edge of the screen surface and then removed over the edge of the surface into a discharge conduit, whereafter it is discharged from the apparatus while liquid contained in the fibre suspension is removed through the screen surface under the influence of the centrifugal force and partially the force of gravity.

The invention will be described in greater detail in the attached drawings, where

Figure 1 is a schematic view of a thickening apparatus of the invention;

Figure 2 is a schematic view of one detail of the apparatus;

Figure 3 is a schematic view of another embodiment of the apparatus of the invention;

Figure 4 illustrates one detail in the embodiment of Figure 3; and

Figure 5 illustrates one detail of another implementation of the embodiment of Figure 3.

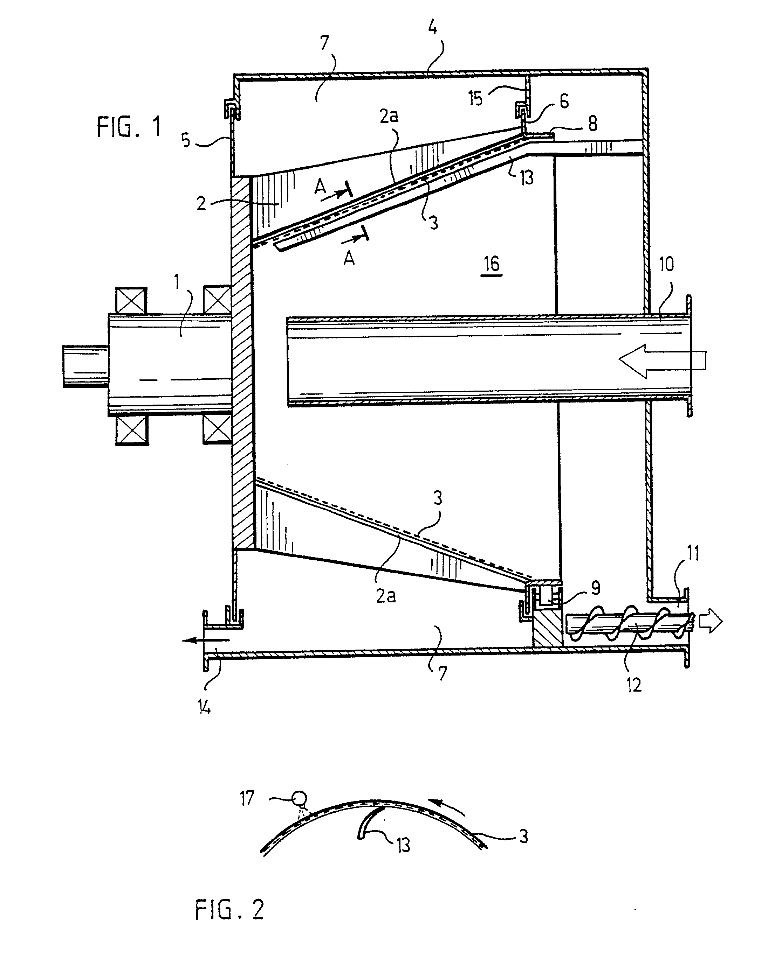

In Figure 1, the thickening apparatus comprises a horizontal shaft 1 driven by a power unit not shown. A horizontal support frame 2 having the shape of a truncated cone is attached to the shaft 1. The support frame 2 comprises a support shell 2a to the inside of which a screen surface similarly having the shape of a truncated cone is attached. As used in this application, the term screen surface refers to a wire or other similar element provided with slots or holes or a plate-like filter which is permeable to liquid contained in the fibre suspension but substantially impermeable to fibres contained in the suspension. In the case of Figure 1, the screen surface is formed by a wire 3 comprising holes. The apparatus is further surrounded with a shell 4, and the support frame 2 comprises flanges 5 and 6 extending perpendicular to the shaft 1. The flanges 5 and 6 are so positioned with respect to the shell 4 that they together with the support frame and the shell 4 define a space 7 between them. The support frame 2 further comprises a cylindrical edge flange 8 which bears on support rolls 9 making contact with the edge flange 8 at the bottom of the apparatus. The apparatus further comprises a pulp feed conduit or pipe 10 which extends concentrically with the shaft 1 close to the narrow end of the truncated cone. Further, the apparatus comprises a pulp discharge conduit 11 provided with a pulp discharge screw 12. A scraper 13 is mounted inside the shell close to the wire 3 nearly over the entire length of the truncated cone, and a water discharge conduit 14 is provided in the bottom of the space 7. In addition to the space 7, the shell 4 defines together with the wire 3, the flange 6 and a partition wall 15 attached to the shell a space 16 into which fibre suspension is introduced through the pipe 10. To clean the wire 3, the apparatus comprises nozzle means 17 positioned after the scraper 13 in the direction of rotation of the screen for directing water and/or air jets to the wire 3 from outside it. The position of the scraper 13 and the nozzle means 17 in the axial direction of the screen is shown in Figure 2.

The apparatus operates in the following way. When the shaft 1 is rotated, the centrifugal thickener formed by the support frame 2 and the wire 3 rotates with it. Fibre suspension is introduced into the thickener through the pipe 10 close to the narrow end of the truncated cone. From there the fibre suspension is passed on to the inner surface of the cone against the wire 3 so that it spreads gradually over the width of the wire 3. As the wire rotates, the centrifugal force causes the water contained in the fibre suspension to be pressed through the wire 3, so that the fibre suspension is thickened. The scraper 13, which is positioned substantially over its entire length at a predetermined distance from the surface of the wire 3, detaches the fibre suspension gathered on the wire 3 at the predetermined distance, so that the fibre suspension drops off, being thus displaced along the wire 3 towards the wide edge of the cone. As the fibre suspension is passed on, it finally reaches the edge of the wire 3 at the outer edge of the cone and falls into the pulp discharge conduit 11, from where it is passed on by means of the pulp discharge screw 12 and removed from the apparatus. Water which has entered the space 7 through the wire 3 is removed through the discharge conduit 14, so that the fibre suspension will be thickened efficiently. The thickener of the invention is simple and inexpensive to construct and small in size in relation to its pulp treating capacity. In addition, the thickener of the invention has a low power consumption as fibre suspension is introduced into it in small quantities and the treatment time in the apparatus is short.

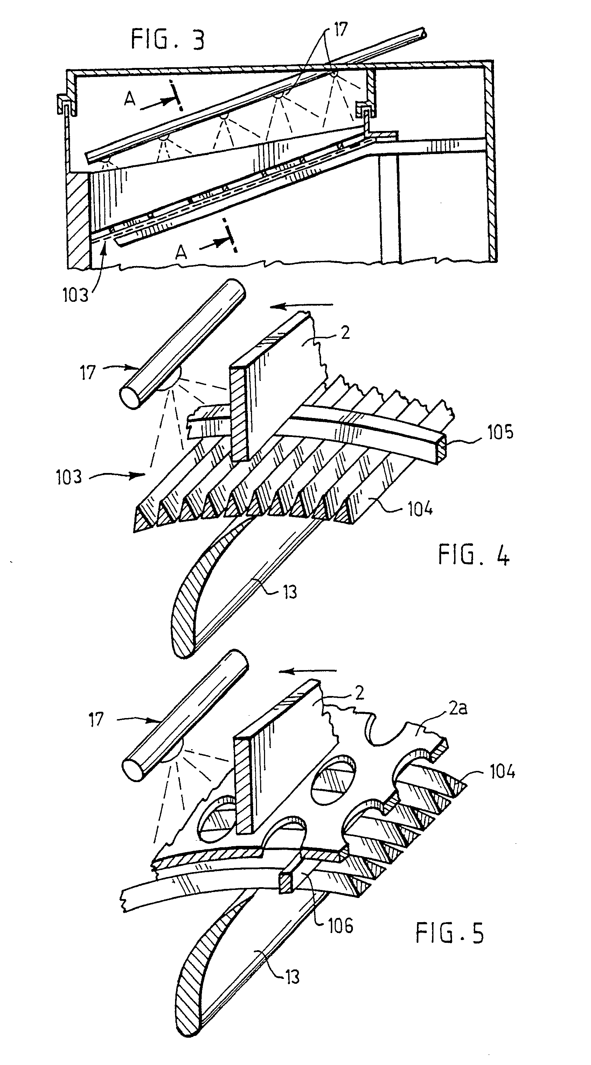

Figure 3 shows another embodiment of the apparatus of the invention, in which the support shell and the wire are replaced with a slotted screen 103. As is shown in Figure 4, the slotted screen is formed by several threads positioned side by side in a direction transverse to the direction of rotation, a slot of suitable size being thus formed between each pair of adjacent threads. The treads 104 are attached to peripherally positioned support rings 105 which in turn are attached to the support frame 2.

Figure 5 shows another implementation of the apparatus of Figure 3, in which the thread(s) 104 of the slotted screen 103 are positioned peripherally. In this implementation, one or more threads 104 are wound spirally side by side so that a suitable slot remains between two adjacent thread windings. Alternatively, each thread winding can be formed by a single thread 104 forming a closed loop. The thread windings are attached to each other by means of support rods 106 which are attached to the support frame 2 or, as shown in Figure 5, to a separate support shell 2a. It further appears from Figures 3 to 5 that the nozzles 17 for cleaning the slotted screen 103 forming the screen surface are positioned outside the screen.

The invention can be modified in various ways depending on the use in each particular case. By suitably selecting the cone angle, that is, the angle between the sides of the cone, the treatment time of the fibre suspension in the thickener can be affected. In this way the dry matter content of the thickened fibre suspension can be adjusted. By varying the cone angle, it is also possible to adjust the ratio between the liquid removal rate and the pulp removal rate. Furthermore, by varying the distance of the end of the feed pipe 10 from the narrow end of the cone, the treatment time and thus the dry matter content can be adjusted. The water removal efficiency and thus the treatment time can also be affected by varying the rate of rotation of the wire. The thickness of the material layer gathered on the screen surface can be adjusted by varying the distance of the scraper 13 from the surface of the wire 3 or the slotted screen 103, so that the thickness of the filtering layer can be selected in such a way that even small fibres remain in the pulp and at the same time the thin fibre layer protects the wire. To prevent the blocking of the wire, water or compressed air jets are applied to the wire from the outside, or the fibre suspension is fully detached from the wire at a predetermined point in some other manner known *per se*. Figure 2 is a more detailed view of one possible structure for the scraper 13, in which the scraper is through-like so that its front edge is directed against the direction of rotation of the wire, so that it acts as a cutter.

The invention has been described above and in the attached drawings by way of example and it is in no way restricted to these examples. The structure of the thickening cone can be modified in various ways, and the spaces 7 and 16 can be separated from each other in many different ways. In place of a wire, it is possible to use some other known screening means suitable for use as a screen surface in the filter. Instead of the discharge screw, fibre suspension can be removed from the apparatus in some other manner known *per se*, such as by directing the pulp discharge conduit 11 downwards so that fibre suspension is removed by means of the force of gravity.

**Claims**

1. An apparatus for thickening fibre suspension, comprising a screen surface (3; 103) rotating around its shaft (1) and a feed conduit (10) for feeding the fibre suspension to be thickened inside the screen surface (3; 103) so that water is removed from the fibre suspension through the screen surface (3; 103) under the influence of the centrifugal force acting on the fibre suspension due to the rotation of the screen surface (3; 103), the thickened fibre suspension being discharged from one edge of the screen surface (3; 103), **characterized** in that the screen surface (3; 103) has the shape of a truncated cone and is arranged to rotate around a horizontal shaft (1), the feed conduit (10) being arranged to feed the fibre suspension to that end of the screen surface (3; 103) which is smaller in diameter, whereby the thickened fibre suspension is discharged from the edge at that end of the screen surface (3; 103) which is larger in diameter.

2. An apparatus according to claim 1, **characterized** in that it comprises a support frame (2) attached to the shaft (1), the screen surface (3; 103) being attached to a support frame (2) to be supported by it.

3. An apparatus according to claim 2, **characterized** in that the support frame (2) is provided with a perforated support shell (2a) having the same shape as the screen surface (3; 103) to support the screen surface (3; 103).

4. An apparatus according to claim 3, **characterized** in that the screen surface (3) is a separate wire or the like mounted within the support shell (2a).

5. An apparatus according to claims 1 to 3, **characterized** in that the screen surface (103) is a slotted screen formed by one or more threads (104).

6. An apparatus according to any of the claims 1 to 5, **characterized** in that the distance of the feed conduit from the end of the screen surface (3; 103) with smaller diameter is adjustable.

7. An apparatus according to any of the claims 1 to 6, **characterized** in that it comprises a scraper means (13) positioned within the screen surface (3; 103) at a distance from the screen surface (3; 103) to remove the fibre suspension gathered on the screen surface (3; 103).

8. An apparatus according to claim 7, **characterized** in that the scraper means extends at least substantially over the length of the screen surface (3; 103) and is positioned substantially in parallel with the screen surface (3; 103).

9. An apparatus according to claim 8, **characterized** in that the distance of the scraper means (13) from the screen surface (3; 103) is adjustable.

10. An apparatus according to any of the preceding claims, **characterized** in that the rate of rotation of the screen surface (3; 103) is adjustable.

FIG. 1

FIG. 2

FIG. 3

FIG. 4

FIG. 5

## DOCUMENTS CONSIDERED TO BE RELEVANT

EP 91100340.8

| Category | Citation of document with indication, where appropriate, of relevant passages | Relevant to claim | CLASSIFICATION OF THE APPLICATION (Int. Cl.5) |
|---|---|---|---|
| X | FR - A1 - 2 597 127 (KAMYR) * Totality * | 1,2,3, 4 | D 21 D 5/20 |
| A | EP - A2 - 0 345 516 (C.F. SCHEER & CIE) * Totality * | 1 | |
| D,A | FI - B - 53 229 (WILSON) * Totality * | 1 | |

TECHNICAL FIELDS SEARCHED (Int. Cl.5)

B 04 B 3/00
D 21 C 9/00
D 21 D 5/00
D 21 F 1/00

The present search report has been drawn up for all claims

| Place of search | Date of completion of the search | Examiner |
|---|---|---|
| VIENNA | 19-03-1991 | KRUMPSCHMID |